Europäisches Patentamt

European Patent Office

Office européen des brevets

(19)

(11) **EP 0 541 739 B1**

(12) **EUROPÄISCHE PATENTSCHRIFT**

(45) Veröffentlichungstag und Bekanntmachung des Hinweises auf die Patenterteilung:
**11.12.1996  Patentblatt 1996/50**

(51) Int Cl.[6]: **G01N 27/30**

(86) Internationale Anmeldenummer:
**PCT/CH92/00095**

(21) Anmeldenummer: **92909681.6**

(22) Anmeldetag: **15.05.1992**

(87) Internationale Veröffentlichungsnummer:
**WO 92/21960 (10.12.1992 Gazette 1992/31)**

(54) **BEZUGSELEKTRODE MIT IONENSPERRE FÜR ELEKTROCHEMISCHE MESSEINRICHTUNGEN**

REFERENCE ELECTRODE WITH AN ION-RETENTION BARRIER FOR ELECTRO-CHEMICAL MEASURING EQUIPMENT

ELECTRODE DE REFERENCE AVEC BARRIERE IONIQUE POUR DISPOSITIFS DE MESURE ELECTROCHIMIQUES

(84) Benannte Vertragsstaaten:
**CH DE FR GB IT LI**

(30) Priorität: **29.05.1991  CH 1588/91**

(43) Veröffentlichungstag der Anmeldung:
**19.05.1993  Patentblatt 1993/20**

(73) Patentinhaber: **Mettler-Toledo AG
CH-8606 Greifensee (CH)**

(72) Erfinder:
- **NIPKOW, André
  CH-8044 Zürich (CH)**
- **BAKKER, Eric
  CH-8057 Zürich (CH)**

(56) Entgegenhaltungen:
**EP-A- 0 366 566          DE-A- 3 305 962
GB-A- 2 093 193          US-A- 3 926 764**

## Beschreibung

Die Erfindung betrifft eine Bezugselektrode mit Ionensperre für elektrochemische Messeinrichtungen gemäss Oberbegriff des Patentanspruchs 1.

Bezugselektroden sind elektrochemische Halbzellen, die eine möglichst konstante Bezugsspannung liefern. Dabei kann die Bezugselektrode eine selbständige Einheit bilden oder Teil einer Kombinationselektrode, z. B. einer Einstabmesskette, sein. Als elektrochemische Messeinrichtungen kommen neben pH-Elektroden und ionenselektiven Elektroden auch Messeinrichtungen für die Coulometrie und die Polarographie in Betracht.

Wenn der ionenleitende Uebergang zwischen Bezugselektrode und Messmedium durch ein poröses Diaphragma stattfindet, kann die Funktion der Bezugselektrode durch Verschmutzung dieses Diaphragmas beeinträchtigt werden. Die Verschmutzung kann unerwünschte Potentiale am Diaphragma erzeugen, den Widerstand des Diaphragmas erhöhen, die Ansprechzeit der Bezugselektrode verlängern oder ihr eine unerwünschte Selektivität verleihen.

Verschmutzungen des Diaphragmas können durch Bestandteile des Messmediums verursacht werden, aber auch durch Ausfällungen, an denen Ionen aus dem Inneren der Bezugselektrode beteiligt sind. So kann beispielsweise Silberchlorid, welches bei hohen KCl-Konzentrationen relativ löslich ist, am Diaphragma ausfallen, weil dort die KCl-Konzentration durch eindiffundierende Messlösung verdünnt wird. Die Funktion der Bezugselektrode kann auch durch Ausfällungen von Ionen aus dem Bezugselement mit Anionen aus der Messlösung, z.B. Silbersulfid, beeinträchtigt werden.

Um ein einwandfreie Funktion der Bezugselektrode zu gewährleisten und Verschmutzungen, an denen Kationen des Bezugssystems, z.B. Silberionen, aus dem Inneren der Bezugselektrode beteiligt sind, zu vermeiden, ist es wünschenswert, die Wanderung solcher Kationen zum Diaphragma zu verhindern. Mit diesem Ziel wurden bereits verschiedene Vorrichtungen entwickelt, die jedoch nur eine unbefriedigende Lösung dieses Problems ergaben. Dabei handelt es sich um

a) Vorrichtungen, welche den konvektiven Transport von Ionen herabsetzen;

b) Vorrichtungen, die durch reversible Bindung oder Ionenabstossung die Diffusion herabsetzen; und

c) Vorrichtungen, die Silberionen oder Silberhalogenidkomplexe irreversibel binden.

Zu den unter (a) erwähnten Vorrichtungen zählen solche, bei denen die durch Konvektion bedingte Wanderung von Kationen, z.B. Silberionen, zum Diaphragma durch den Einbau einer Diffusionsstrecke zwischen dem Ableitdraht der Bezugselektrode und dem Diaphragma verhindert wird. Als Beispiel hierfür ist eine von der Patentbewerberin entwickelte Einstabmesskette, bei der zu diesem Zweck eine Wattestrecke eingebaut ist, zu nennen. Ferner ist aus der DE-PS 32 28 647 bekannt, einen gel- oder polymerfixierten Bezugselektrolyten zu verwenden, sowie aus der GB-OS 20 93 194, einen Brückenelektrolyten mit porösem Diaphragma als Uebergang zum Bezugselektrolyten einzubauen.

Die Wirksamkeit der genannten Vorrichtungen ist jedoch begrenzt, da Silberionen mit der Zeit durch Diffusion das Diaphragma erreichen können.

Zu den unter (b) genannten Vorrichtungen zählt beispielsweise die in der DE-PS 33 05 962 beschriebene, bei der die Diffusion von Silberionen zum Diaphragma durch den Einbau von Anionen-, Kationen- oder Anionen-Kationenaustauschern, an denen Silberhalogenidkomplexe, z.B. $(AgCl_4)^{3-}$ reversibel gebunden werden, verlangsamt wird. Zu diesen Vorrichtungen zählt ferner die aus der GB-OS 20 93 193A bekannte, bei der die Diffusion durch den Einbau eines mikroporösen Polymers, an dessen Porenwänden Sulfongruppen gebunden sind, vermindert wird, da diese Sulfongruppen die negativ geladenen $(AgCl_4)^{3-}$-Komplexe abstossen.

Die Wirksamkeit dieser Vorrichtungen ist begrenzt, weil die Diffusion von Silberionen zum Diaphragma nicht verhindert, sondern nur vermindert wird. Die Wirksamkeit ist insbesondere bei hohen Temperaturen schlecht, weil die Diffusionsgeschwindigkeit der Ionen mit der Temperatur stark zunimmt. So wurde durch Messungen festgestellt, dass eine Vorrichtung gemäss GB-OS 20 93 193A bei 80°C die 38-fache Anzahl von Silberionen passieren lässt, wie bei 25°C.

Hingegen wird mittels der unter (c) genannten Vorrichtungen, bei denen durch den Einbau von Ionenaustauschern, an welche die Silberionen oder Silberhalogenidkomplexe irreversivel gebunden werden, eine vollständige Verhinderung der Diffusion der Silberionen zum Diaphragma erreicht. Derartige Vorrichtungen sind in den DE-OSen 34 15 089 und 39 34 302 beschrieben.

Da die Wirkung dieser Vorrichtungen auf einem Oberflächeneffekt beruht, ist ihre Kapazität beschränkt. Der Nachteil dieser Vorrichtungen ist somit in ihrer begrenzten Lebensdauer zu sehen, da, sobald alle Bindungsstellen des als Ionensperre wirkenden Ionenaustauschers besetzt sind, die nachfolgenden Kationen, z. B. Silberionen, durch diesen hindurch zum Diaphragma diffundieren können.

Aufgabe der Erfindung ist es daher, eine Bezugselektrode zu schaffen, bei der die Wanderung von aus deren Innerem stammenden Kationen, z.B. Silberionen, zum Diaphragma und folglich dessen Verschmutzung verhindert wird.

Die gestellte Aufgabe wird mittels der im kennzeichnenden Teil des Patentanspruchs 1 definierten Bezugselektrode gelöst.

Bei dieser Bezugselektrode funktioniert die Ionensperre im Gegensatz zu den bekannten Ionensperren, die abgesehen von Konvektions- und Diffusionsbehinderung auf den Prinzipien ionischer Wechselwirkung und ionischer Bindung beruhen, nach dem Prinzip von Redoxvorgängen, d.h. dem Austausch von Elektronen. Das im Bezugselektrolyten enthaltene, zu sperrende Metallion bildet mit dem die Ionensperre bildenden Material, insbesondere einem Reduktionsmittel, ein Redoxsystem. Dabei kommt die Sperrwirkung dadurch zustande, dass das zu sperrende Metallion zu Metall reduziert und abgeschieden wird, während das Reduktionsmittel einer Oxidationsreaktion unterliegt.

Als Reduktionsmittel kommen beispielsweise anorganische oder organische Redoxaustauscher oder anorganische Substanzen, wie Metalle, einschliesslich Uebergangsmetalle, Halbmetalle und Legierungen, oder Amalgame in Betracht.

Das Reduktionsmittel wird vorzugsweise so gewählt, dass im oxidierten Zustand keine Verschmutzung des Diaphragmas durch unerwünschte Niederschläge verursacht, so dass jegliche Verschmutzungsgefahr für das Diaphragma ausgeschlossen werden kann.

Falls die Bezugselektrode für die Verwendung in biotechnischen Prozessen bestimmt ist, wird zweckmässigerweise ein Reduktionsmittel gewählt, das im oxidierten Zustand Ionen bildet, die eine geringere Toxizität aufweisen als die im Bezugselektrolyten enthaltenen, zu sperrenden Ionen, so dass im Betriebszustand eine Kontamination des Messmediums durch toxische Ionen, welche die Ionensperre und die Bezugselektrode verlassen, verhindert werden kann.

In wässrigen Lösungen neigen unedle Metalle, wie beispielsweise Zink, insbesondere in Gegenwart von Protonen zur Bildung von Wasserstoff, wie durch die nachfolgende Gleichung

$$Zn + 2H^+ \; \text{--->} \; Zn^{2+} + H_2 \; ^{\wedge}$$

veranschaulicht wird. Diese Reaktion wird noch gefördert, wenn das Zink mit dem abgeschiedenen reduzierten Silber ein Lokalelement bildet und elektrolytisch korrodiert. Um die unerwünschte Wasserstoffbildung in Fällen, in denen für die Bildung des Redoxsystems ein unedles Metall, z.B. Zink, verwendet wird, und eine durch die Bildung von feinen Wasserstoffbläschen, welche Elektrolyt aus den Zwischenräumen des in Form eines Pulver vorliegenden unedlen Metalls verdrängen und eine unerwünschte Erniedrigung der Ionenleitfähigkeit verursachen können, zu verhindern, empfiehlt sich der Zusatz eines schwerlöslichen basisch reagierenden Metalloxids oder Erdalkalimetalloxids zu dem in Form eines Pulvers vorliegenden unedlen Metall.

Gemäss einer bevorzugten Ausbildung der Bezugselektrode der eingangs erwähnten Art ist diese eine Ag/AgCl-Elektrode, die als das die Ionensperre bildende Reduktionsmittel Zinkpulver mit einer Beimengung von Erdalkalimetalloxid enthält.

Wie bereits erwähnt, kann die Bezugselektrode als selbständige Einheit oder als Teil einer Kombinationselektrode, z.B. einer Einstabmesskette ausgebildet sein.

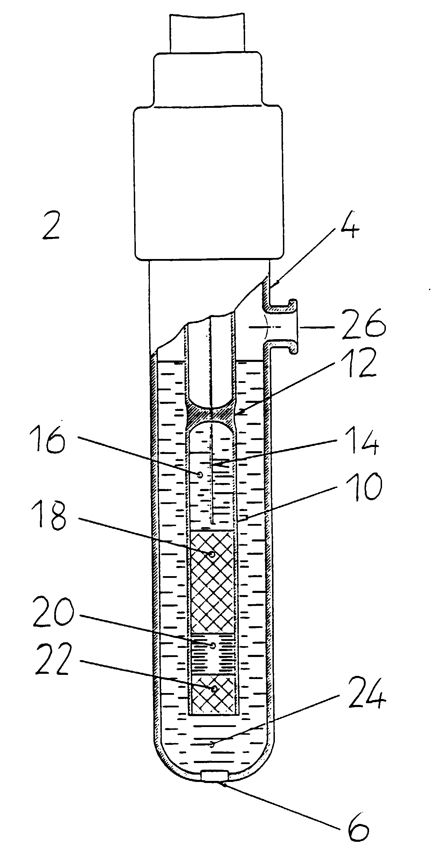

Die Erfindung wird nachstehend anhand der Zeichnung und am Beispiel einer Ag/AgCl-Elektrode näher erläutert, dabei zeigt:

Die Figur    eine als selbständige Einheit ausgebildete Bezugselektrode, teilweise im Schnitt.

In der Figur ist eine Ag/AgCl-Bezugselektrode 2 mit eingebauter Silberionensperre dargestellt. In einem von einem rohrförmigen Elektrodenschaft 4, z.B. aus Glas, der mit einem Diaphragma 6 ausgestattet ist, umschlossenen Elektrodeninnenraum 8 befindet sich ein einseitig offenes Innenrohr 10, das in seinem dem Diaphragma 6 abgewandten Bereich mit einer Abdichtung 12 verschlossen ist. Durch diese Abdichtung ragt ein Silberdraht 14 in eine Schicht 16 aus AgCl-Pulver. Ausgehend von der Schicht 16 folgen in Richtung des offenen Endes des Innenrohres 10 nacheinander eine erste Wattestrecke 18, eine aus Zinkpulver mit einem Zusatz von Erdalkalimetalloxid gebildete Reduktionsmittelschicht 20 und eine zweite Wattestrecke 22 als Abschluss gegenüber dem Elektrodeninnenraum 8. Der Elektrodeninnenraum 8 und das Innenrohr 10 sind mit einem Bezugselektrolyten 24, beispielsweise einer 3-molaren KCl-Lösung gefüllt. Zum Einbringen des Bezugselektrolyten 24 ist ein in den Elektrodenschaft 4 eingelassener Einfüllstutzen 26 vorgesehen.

Bei dem gezeigten Beispiel einer Ag/AgCl-Bezugselektrode mit eingebauter Ionensperre ist die Umgebung des Silberdrahtes 14 silbergesättigt, so dass der Silberdraht eine konstante Spannung abgibt. Die erste Wattestrecke 18, die durch locker gestopfte Baumwollwatte gebildet ist, vermindert den konvektiven Transport von Silberionen zur Silberionensperre, d.h. der aus Zinkpulver mit einem Zusatz von Erdalkalimetalloxid gebildeten Reduktionsmittelschicht 20. Die durch die erste Wattestrecke 18 diffundierenden Silberionen werden in der Silberionensperre reduziert und als metallisches Silber abgeschieden, während das Zink oxidiert wird. Durch das zugesetzte Erdalkalimetalloxid wird eine unerwünschte Wasserstoffentwicklung, die zu einer unerwünschten Erniedrigung der Ionenleitfähigkeit führen könnte, verhindert. Die zweite Wattestrecke 22 dient zur Fixierung der Silberionensperre im Innenrohr 10.

Die Vorteile einer Bezugselektrode mit einer Silberionensperre der im Vorhergehenden beschriebenen Art sind ihre Sterilisierbarkeit, die Stabilität des Nullpunktes und ihre niedrige Impedanz ($\leqq$ kOhm). Zudem ist die Lebendauer der Silberionensperre aufgrund ihrer vergleichsweise riesigen Kapazität praktisch unbegrenzt.

**Fonktionsprüfung der als Beispiel beschriebenen Bezugselektrode**

Silberionenaustritt:

Wurde ein Bezugselement, welches aus den im vorstehenden Beispiel beschriebenen Teilen 10 bis 22 besteht, bei 80°C in 5 ml 3-molarer KCl-Lösung als Elektrolyt aufbewahrt, so konnten nach 70 Tagen im Elektrolyten mittels einer Silbersulfid-Elektrode keine Silberionen nachgewiesen werden. Auch wenn die gleiche Anordnung 50-mal einem Temperaturzyklus zwischen 90°C und 130°C mit einer Haltezeit von 30 Minuten bei 130°C ausgesetzt worden war, konnte kein Silberaustritt festgestellt werden. Hingegen stieg die Silberionenkonzentration im Elektrolyten bei vergleichbarer Versuchsanordnung sowohl nach 20 Tagen bei 80°C als auch nach 25 Temperaturzyklen auf $> 10^{-3}$ Mol/Liter, wenn anstelle des Reduktionsmittels nur Watte eingefüllt worden war.

Zinkionenaustritt:

Die Zinkionenkonzentration im Elektrolyten betrug nach gleicher Behandlung, wie oben beschrieben, immer $\leq 4x10^{-7}$ Mol/Liter und war damit wesentlich kleiner als es die Silberionenkonzentration bei einem Bezugselement ohne Silberionensperre wäre (Silberionenkonzentration ohne Silberionensperre: $> 10^{-3}$ Mol/Liter).

Nullpunkt:

Die Nullpunktsverschiebungen bei Bezugs elementen mit Silberionensperre und solchen ohne Silberionensperre waren nach 50 Temperaturzyklen, wie oben beschrieben, statistisch nicht unterscheidbar.

Impedanz:

Die Impedanz von Bezugselementen mit Silberionensperre schwankte im Verlauf von 50 Temperaturzyklen zwischen 1 und 3 kOhm. Die Impedanz von Kontrollanordnungen ohne Silberionensperre blieb konstant bei 1 kOhm.

Langzeitverhalten:

Nullpunkt und Impedanz von Bezugselektroden mit Silberionensperre blieben über einen Zeitraum von fünf Monaten bei Raumtemperatur ebenso konstant wie die entsprechenden Werte von Bezugselektroden ohne Silberionensperre.

Neben der anhand des Beispiels beschriebenen bevorzugten Ausbildung bestehen noch andere Möglichkeiten für die Ausbildung einer wirksamen Ionensperre, beispielsweise mittels Dünnschicht- oder Dickschichttechnik hergestellte Ionensperren. So können beispielsweise auf eine planare, in Dickschichttechnik hergestellte Bezugselektrode mittels Siebdruck nacheinander eine Diffusionsschicht und eine aus einem Gemisch von Zinkpulver und einem ionenleitenden Trägermaterial bestehende Silberionensperre aufgebracht werden. Ausserdem besteht die Möglichkeit, auf den Ableitdraht einer Bezugselektrode eine Diffusionsschicht und eine Silberionensperrschicht im Tauchverfahren aufzubringen.

## BEZUGSZEICKENLISTE

2   Ag/AgCl-Bezugselektrode

4   Elektrodenschaft

6   Diaphragma

8   Elektrodeninnenraum

10   Innenrohr

12   Abdichtung

14   Silberdraht

16   AgCl-Schicht

18   1. Wattestrecke

20   Reduktionsmittelschicht als Ionensperre

22   2. Wattestrecke

24   Bezugselektrolyt

26   Einfüllstutzen

### Patentansprüche

1. Bezugselektrode für elektrochemische Messeinrichtungen mit einem Metallionen enthaltenden Bezugselektrolyten (24) und einer Ionensperre (20) für diese Metallionen, dadurch gekennzeichnet, dass das die Ionensperre (20) bildende Material mit den im Bezugselektrolyten (24) enthaltenen zu sperrenden Ionen ein Redoxsystem bildet.

2. Bezugselektrode nach Anspruch 1, dadurch gekennzeichnet, dass die Ionensperre (20) ein Reduktionsmittel für die zu sperrenden Ionen ist.

3. Bezugselektrode nach Anspruch 1 oder 2, dadurch gekennzeichnet, dass das Reduktionsmittel ein anorganischer oder organischer Redoxaustauscher ist.

4. Bezugselektrode nach Anspruch 1 oder 2, dadurch gekennzeichnet, dass das Reduktionsmittel ein Metall oder ein Amalgam ist.

5. Bezugselektrode nach einem der Ansprüche 1 bis 4, dadurch gekennzeichnet, dass sie für die Verwendung in biotechnischen Prozessen bestimmt ist und das Reduktionsmittel so gewählt ist, dass die im oxidierten Zustand gebildeten Ionen nicht toxisch sind.

6. Bezugselektrode nach einem der Ansprüche 1 bis 5, dadurch gekennzeichnet, dass das Reduktionsmittel aus einem oxidierbaren Metall und einem schwer löslichen, basisch reagierenden Metalloxid oder Erdalkalimetalloxid besteht.

7. Bezugselektrode nach einem der Ansprüche 1 bis 6, dadurch gekennzeichnet, dass sie eine Ag/AgCl-Elektrode (2) ist und das Reduktionsmittel aus Zinkpulver mit einem Zusatz von Erdalkalimetalloxid besteht.

## Claims

1. A reference electrode for electrochemical measuring devices with a reference electrolyte (24) containing metal ions, and an ion barrier (20) for said metal ions, characterised in that the material forming the ion barrier (20) forms a redox system with the ions to be blocked, which are contained in the reference electrolyte (24).

2. A reference electrode according to claim 1 characerised in that the ion barrier (20) is a reducing agent for the ions to be blocked.

3. A reference electrode according to claim 1 or claim 2 characterised in that the reducing agent is an inorganic or organic redox exchanger.

4. A reference electrode according to claim 1 or claim 2 characterised in that the reducing agent is a metal or an amalgam.

5. A reference electrode according to one of claims 1 to 4 characterised in that it is intended for use in biotechnical processes and the reducing agent is so selected that the ions formed in the oxidised condition are not toxic.

6. A reference electrode according to one of claims 1 to 5 characterised in that the reducing agent comprises an oxidisable metal and a difficultly soluble basic-reaction metal oxide or alkaline-earth metal oxide.

7. A reference electrode according to one of claims 1 to 6 characterised in that it is an Ag/AgCl-electrode (2) and the reducing agent comprises zinc powder with an addition of alkaline-earth metal oxide.

## Revendications

1. Electrode de référence pour systèmes de mesure électrochimiques avec un électrolyte de référence (24), contenant des ions métal, et une barrière ionique (20) pour ces ions métal, électrode de référence caractérisée en ce que la matière constituant la barrière ionique (20) forme avec les ions à arrêter contenus dans l'électrolyte de référence (24) un système d'oxydo-réduction.

2. Electrode de référence selon la revendication 1, caractérisée en ce que la barrière ionique (20) est un agent de réduction pour les ions à arrêter.

3. Electrode de référence selon la revendication 1 ou 2, caractérisée en ce que l'agent de réduction est un échangeur d'oxydo-réduction inorganique ou organique.

4. Electrode de référence selon la revendication 1 ou 2, caractérisée en ce que l'agent de réduction est un métal ou un amalgame.

5. Electrode de référence selon l'une des revendications 1 à 4, caractérisée en ce qu'elle est conçue pour être utilisée dans des procédés biotechniques et en ce que l'on choisit l'agent de réduction d'une manière telle que les ions formés à l'état oxydé ne soient pas toxiques.

6. Electrode de référence selon l'une des revendications 1 à 5, caractérisée en ce que l'agent de réduction consiste en un métal oxydable et un oxyde métallique ou un oxyde de métal alcalino-terreux difficilement soluble, réagissant basiquement.

7. Electrode de référence selon l'une des revendications 1 à 6, caractérisée en ce qu'elle est une électrode en Ag/AgCl (2) et en ce que l'agent de réduction consiste en poudre de zinc avec une addition d'oxyde de métal alcalino-terreux.